(19) Europäisches Patentamt
European Patent Office
Office européen des brevets

(11) **EP 4 733 089 A1**

(12) **EUROPEAN PATENT APPLICATION**
published in accordance with Art. 153(4) EPC

(43) Date of publication:
29.04.2026 Bulletin 2026/18

(21) Application number: 24849006.2

(22) Date of filing: 23.07.2024

(51) International Patent Classification (IPC):
*B60C 19/00* (2006.01)     *B60C 23/04* (2006.01)
*H02N 1/00* (2006.01)

(52) Cooperative Patent Classification (CPC):
B60C 19/00; B60C 23/04; H02N 1/00

(86) International application number:
PCT/JP2024/026386

(87) International publication number:
WO 2025/028351 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.08.2023 JP 2023127095

(71) Applicants:
• SUMITOMO RUBBER INDUSTRIES, LTD.
Kobe-shi, Hyogo 651-0072 (JP)
• The School Corporation Kansai University
Suita-shi, Osaka 564-8680 (JP)

(72) Inventors:
• FUJIWARA, Takahiro
Kobe-shi, Hyogo 651-0072 (JP)
• SUGIMOTO, Mutsuki
Kobe-shi, Hyogo 651-0072 (JP)
• KURODA, Kenichi
Kobe-shi, Hyogo 651-0072 (JP)
• TANI, Hiroshi
Suita-shi, Osaka 564-8680 (JP)
• KAMEKAWA, Hisae
Kobe-shi, Hyogo 651-0072 (JP)

(74) Representative: Manitz Finsterwald
Patent- und Rechtsanwaltspartnerschaft mbB
Martin-Greif-Straße 1
80336 München (DE)

(54) **TIRE ASSEMBLY**

(57) A tire assembly includes a tire mounted on a vehicle, a first power generation body unit, and a second power generation body unit that is different from the first power generation body unit. The first power generation body unit includes a power generation body disposed on an inner surface of the tire, and a pushing member fixed to the inner surface of the tire on both sides of the power generation body across the power generation body along a circumferential direction of the tire, the pushing member being deformable as the tire deforms. The second power generation body unit includes a power generation body fixed to the inner surface of the tire, and a weight member superimposed on the power generation body from a side opposite the inner surface across the power generation body.

Fig.3

EP 4 733 089 A1

**Description**

TECHNICAL FIELD

The present invention relates to a tire assembly in which a power generation body is incorporated within a tire.

BACKGROUND ART

WO 2022/180916 (Patent Literature 1) discloses a tire assembly having a builtin contact-charging power generation body. The power generation body includes a positively charged insulating film and a negatively charged insulating film, and generates electromotance by changing a true contact area of a contact surface of the above insulating films. In the tire assembly disclosed in Patent Literature 1, the power generation body is disposed between an inner surface of the tire and an elastic body disposed inward of the tire. The elastic body biases the power generation body toward the inner surface of the tire. Accordingly, the impact that the tire receives from the traveling surface can be utilized efficiently to promote charging of the insulating films.

CITATION LIST

PATENT LITERATURE

Patent Literature 1: WO 2022/180916

SUMMARY OF THE INVENTION

TECHNICAL PROBLEMS

The tire assembly, like one in Patent Literature 1, primarily promotes charging of the insulating films by utilizing change in strain of the tire. However, with such a configuration, the above charging promotion effect may weaken, and sufficient electric power may not be obtained depending on rotation speeds of the tire. Accordingly, such a tire assembly has been desired that is able to obtain sufficient electric power regardless of the rotation speeds of the tire.
An object of the present invention is to provide a tire assembly that is able to obtain sufficient electric power over a wider range of rotation speeds.

SOLUTIONS TO THE PROBLEMS

A tire assembly according to a first aspect of the present invention includes a tire mounted on a vehicle, one or a plurality of first power generation body units, and one or a plurality of second power generation body units that are different from the first power generation body units. The first power generation body unit includes a power generation body disposed on an inner surface of the tire, and a pushing member fixed to the inner surface of the tire on both sides of the power generation body across the power generation body along a circumferential direction of the tire, the pushing member being deformable as the tire deforms. The second power generation body unit includes a power generation body fixed to the inner surface of the tire and a weight member superimposed on the power generation body from a side opposite the inner surface across the power generation body. The power generation body includes a first member with a first insulating film that forms a first surface, and a second member with a second insulating film that forms a second surface facing the first surface and contacting the first surface. The first member and the second member are configured such that a true contact area between the first surface and the second surface changes in response to forces applied to the first member and the second member. The first insulating film and the second insulating film are configured such that one is positively charged and the other is negatively charged as the true contact area changes.
A tire assembly according to a second aspect of the present invention is the tire assembly according to the first aspect, in which the first power generation body unit is plural in number, and the plurality of first power generation body units include at least one first power generation body unit including a weight member with a mass of M1 disposed between the power generation body and the pushing member, and at least one first power generation body unit including a weight member with a mass of M2 disposed between the power generation body and the pushing member, where M1 > M2.
A tire assembly according to a third aspect of the present invention is the tire assembly according to the first aspect or the second aspect, in which the second power generation body unit is plural in number, and the plurality of second power generation body units include at least one second power generation body unit including a weight member with a mass of M3, and at least one second power generation body unit including a weight member with a mass of M4, where M3 < M4.

A tire assembly according to a fourth aspect of the present invention is the tire assembly according to any of the first aspect to the third aspect, in which the second power generation body unit is plural in number, and the plurality of second power generation body units include at least one second power generation body unit having the first surface and the second surface each with an area of S1, and at least one second power generation body unit having the first surface and the second surface each with an area of S2, where S1 < S2.

A tire assembly according to a fifth aspect of the present invention is the tire assembly according to any of the first aspect to the fourth aspect, and further includes one or a plurality of circuits configured to receive power supply from each of the first power generation body unit and the second power generation body unit, and to be connected to an external computer in a data communicable manner.

A tire assembly according to a sixth aspect of the present invention is the tire assembly according to any of the first aspect to the fifth aspect, in which the first power generation body unit, the second power generation body unit, and the circuit are distributed and disposed at four or more locations along the circumferential direction of the tire.

A tire assembly according to a seventh aspect of the present invention is the tire assembly according to any of the first aspect to the sixth aspect, in which the first power generation body unit, the second power generation body unit, and the circuit are distributed and disposed at six or fewer locations along the circumferential direction of the tire.

A tire assembly according to an eighth aspect of the present invention is the tire assembly according to any of the first aspect to the seventh aspect, and further includes a weight configured to reduce a mass difference among the first power generation body unit, the second power generation body unit, and the circuit that are distributed and disposed.

A tire assembly according to a ninth aspect of the present invention is the tire assembly according to any of the first aspect to the eighth aspect, in which at least one of the first power generation body unit, the second power generation body unit, and the circuit is disposed at a position deviated from a point that divides the tire into N equal parts along the circumferential direction.

A tire assembly according to a tenth aspect of the present invention is the tire assembly according to any of the first aspect to the ninth aspect, in which the pushing member contains at least one of rubber, a thermoplastic elastomer, a thermoplastic resin, and a thermosetting resin.

A tire assembly according to an eleventh aspect of the present invention is the tire assembly according to any of the first aspect to the tenth aspect, in which the pushing member contains a composite material of rubber and a carbon fiber.

A tire assembly according to a twelfth aspect of the present invention is the tire assembly according to any of the first aspect to the eleventh aspect, in which the computer is configured to monitor at least one of an air pressure of the tire, an internal temperature of the tire, and a rotation speed of the tire.

A method of manufacturing a tire assembly according to a thirteenth aspect of the present invention is a method of manufacturing a tire assembly, the tire assembly including a tire mounted on a vehicle, and a power generation body including a first member with a first insulating film that forms a first surface and a second member with a second insulating film that forms a second surface facing the first surface and contacting the first surface, the first member and the second member being configured such that a true contact area between the first surface and the second surface changes in response to forces applied to the first member and the second member, the first insulating film and the second insulating film being configured such that one is positively charged and the other is negatively charged as the true contact area changes, the method including

· preparing the tire,
· preparing at least three power generation bodies including a first power generation body, a second power generation body, and a third power generation body, and
· disposing the at least three power generation bodies on an inner surface of the tire individually.

Disposing the at least three power generation bodies on the inner surface of the tire individually includes fixing a pushing member deformable as the tire deforms to the inner surface of the tire on both sides of the first power generation body across the first power generation body along a circumferential direction of the tire such that a generated power amount of the first power generation body peaks in a first speed region of a rotation speed of the tire and disposing a first weight member having a first mass between the first power generation body and the pushing member, superimposing a second weight member having a second mass on the power generation body from a side opposite the inner surface across the power generation body such that a generated power amount of the second power generation body peaks in a second speed region of the rotation speed of the tire, and fixing an additional pushing member to the inner surface of the tire on both sides of the third power generation body across the third power generation body along the circumferential direction of the tire such that a generated power amount of the third power generation body peaks in a third speed region of the rotation speed of the tire and disposing a third weight member having a third mass smaller than the first mass between the third power generation body and the additional pushing member, or superimposing a fourth weight member having a fourth mass larger than the second mass on the third power generation body from a side opposite the inner surface across the third power generation body such that the generated power amount of the third power generation body peaks in the third speed region of the rotation speed of the tire. The rotation speed in the first speed region is slower than the rotation speed in the third speed region, and the rotation speed in the third speed region is slower than the rotation speed in the second speed region.

ADVANTAGEOUS EFFECTS OF THE INVENTION

According to the present invention, the tire assembly that is able to obtain sufficient electric power over a wider range of rotation speeds is provided.

BRIEF DESCRIPTION OF THE DRAWINGS

Fig. 1 is a diagram illustrating a state in which a tire assembly according to a first embodiment is mounted on a vehicle.

Fig. 2 is a development view of the tire assembly according to the first embodiment.

Fig. 3 is a longitudinal sectional view of the tire assembly according to the first embodiment.

Fig. 4 is a cross-sectional view of a power generation body according to the first embodiment.

Fig. 5 is a diagram illustrating a charging principle of the power generation body.

Fig. 6 is a graph illustrating a finding based on Inventors' experiments.

Fig. 7A is a graph illustrating the behavior of a first unit.

Fig. 7B is a graph illustrating the behavior of a second unit.

Fig. 8 is a longitudinal sectional view of a tire assembly according to a second embodiment.

Fig. 9 is a graph illustrating a finding based on Inventors' experiments.

Fig. 10 is a longitudinal sectional view of a tire assembly according to a third embodiment.

Fig. 11 is a graph illustrating a finding based on Inventors' experiments.

Fig. 12 is a longitudinal sectional view of a tire assembly according to a fourth embodiment.

Fig. 13 is a development view of a tire assembly according to a modification.

Fig. 14 is a diagram illustrating a configuration of a testing device.

Fig. 15 is a graph representing results of Test 2.

Fig. 16 is a graph representing results of Test 3.

DESCRIPTION OF EMBODIMENTS

The following describes a tire assembly according to several embodiments of the present invention with reference to drawings. Note that dimensions of various elements in the diagrams may be shown in an exaggerated manner for convenience of description.

A. First embodiment

<1. Overall Configuration>

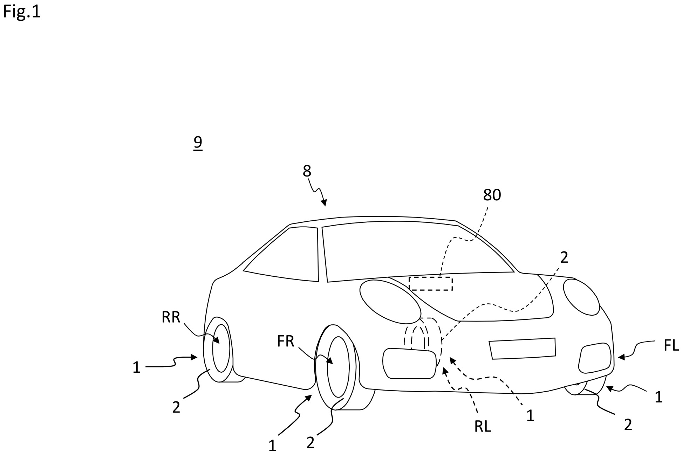

Fig. 1 is a diagram illustrating a state in which a tire assembly 1 according to a first embodiment of the present invention is mounted on each hub (hereinafter, also referred to as "wheel") of a vehicle 8. The type of vehicle 8 is not particularly limited. In the present embodiment, it is a four-wheeled vehicle and includes a left front wheel FL, a right front wheel FR, a left rear wheel RL, and a right rear wheel RR. The tire assembly 1 of the present embodiment is mounted on each of the wheels FL, FR, RL, and RR of the vehicle 8 while it is assembled to each of the wheels.

The vehicle 8 is equipped with an in-vehicle system 9 (hereinafter, also simply referred to as "system 9"). The system 9 is configured to monitor at least one state of the tire assembly 1 (or tire 2 included in the tire assembly 1) such as an air pressure, an internal temperature, and a rotation speed of the tire assembly 1. In other words, the system 9 may be a known TPMS (Tire Pressure Monitoring System) or a TMS (Tire Monitoring System). The system 9 is configured to include at least one of an air pressure sensor, a temperature sensor, and a rotation speed sensor that is attached to the wheel or the tire assembly 1. The tire assembly 1 is configured to generate power during travel of the vehicle 8 and supply power to devices such as the sensors included in the system 9.

The system 9 may further include a control device 80 that is mounted on the vehicle 8 and capable of wired or wireless data communication with the above sensors. The control device 80 is a microcomputer or the like as hardware, and it may be preinstalled in the vehicle 8 or installed in the vehicle 8 as a retrofit. The control device 80 is configured to acquire at least one piece of data pertaining to the air pressure, the internal temperature, and the rotation speed detected by the above sensors, and to monitor at least one of the air pressure, the internal temperature, and the rotation speed. Moreover, the control device 80 may be connected to a display and may display an ON/OFF status of the sensors and the data of the air pressure, the internal temperature, and the rotation speed data outputted by the sensors on the display.

<2. Configuration of Tire Assembly>

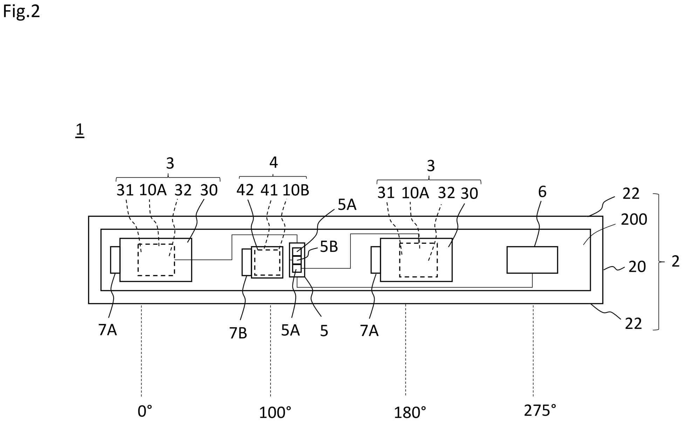

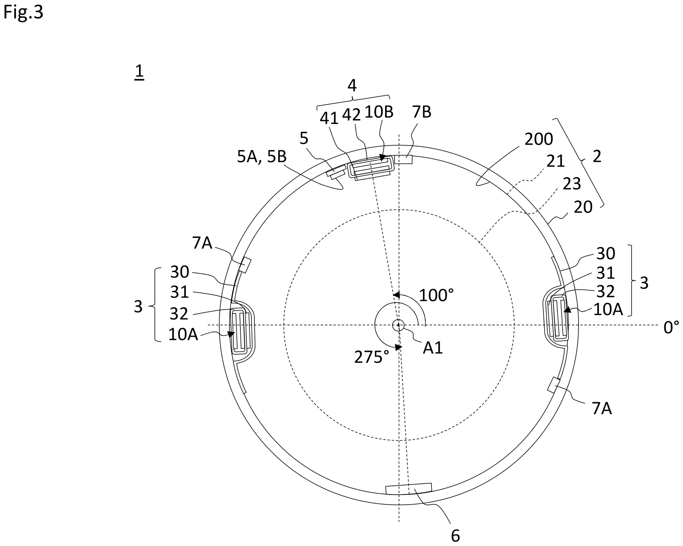

Hereinafter, the configuration of the tire assembly 1 according to the present embodiment will be described with reference to the drawings. Fig. 2 is a schematic view when the tire assembly 1 is opened out, and Fig. 3 is a longitudinal sectional view (a sectional view of a tread part 20 cut in two along a circumferential direction) of the tire assembly 1. The tire assembly 1 of the present embodiment includes a tire 2, two first power generation body units 3 (hereinafter, referred to as "first unit 3"), one second power generation body unit 4 (hereinafter, referred to as "second unit 4"), rectifier circuits 5A and 5B, a power supply control circuit 6, and two weights 7A and 7B. These are distributed and disposed in four locations along the circumferential direction of the tire 2. The following describes each of the members.

[Tire]

The tire 2 is constituted by vulcanized rubber or the like, and has elasticity. As shown in Figs. 2 and 3, the tire 2 has the tread part 20, a shoulder part 21, sidewall parts 22, and a bead part 23. The tread part 20 is a portion defining a side peripheral surface of the tire assembly 1, and moves the vehicle 8 forward by contacting the traveling surface and generating friction. The shoulder part 21 is a portion adjacent to the tread part 20 and the sidewall parts 22. The sidewall parts 22 are the portions that form side surfaces of the sidewall parts 22, bending and deflecting to absorb the impact from the traveling surface. The bead part 23 incorporates a bead wire not shown, and is fixed to a rim, not shown, that is formed on a peripheral part of a wheel.

[First Unit]

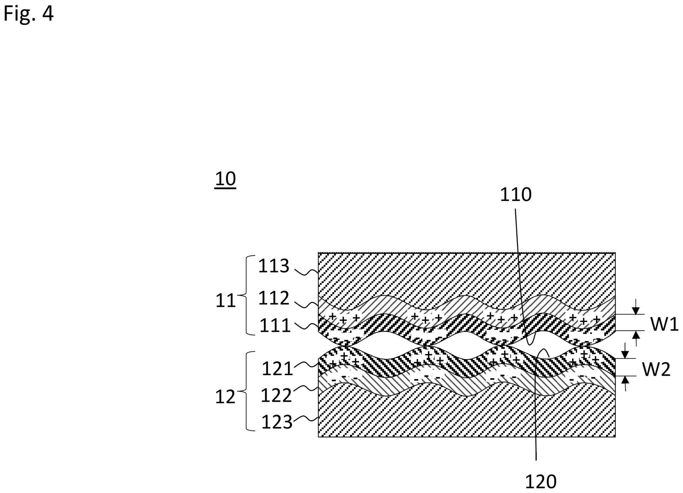

The first unit 3 has a power generation body 10A, a pushing member 30, a weight member 31, and a tape 32. The power generation body 10A is a device that utilizes contact charging, and has a first member 11 and a second member 12 that are stacked and are rectangular in plan view (see Fig. 4). A detailed construction of the power generation body 10A is to be described later. The first member 11 and the second member 12 are fixed in a stacked state while being wrapped around with the tape 32. The tape 32 has a base whose one side is an adhesive surface with adhesive, and is wound around the power generation body 10A so that the adhesive surface sticks to a first base 113 of the first member 11 and a second base material 123 of the second member 12, respectively, which are to be described later. The tape 32 is not particularly limited as long as it has sufficient strength and adhesion, but from the viewpoint of ensuring heat resistance, a glass cloth tape using a glass cloth as the base is preferable.

The tape 32 wound around the power generation body 10A is fixed to an inner surface 200 of the tread part 20 on a base surface opposite the adhesive surface. Accordingly, the power generation body 10A is disposed on the inner surface 200 of the tread part 20 via the tape 32. Here, the power generation body 10A may be disposed such that either the first member 11 or the second member 12 is positioned on a side of the inner surface 200. Moreover, a method of fixing the tape 32 to the inner surface 200 is not particularly limited, and bonding with an adhesive may be made, for example.

The weight member 31 is a plate-shaped member having substantially the same rectangular appearance as the power generation body 10A in plan view. The weight member 31 is stacked on the power generation body 10A so as to be positioned radially inward of the power generation body 10A with respect to a central axis A1 of the tire assembly 1. In the present embodiment, the weight member 31 is fixed to the base surface of the tape 32 that faces radially inward. That is, the weight member 31 may be stacked on either side of the first member 11 or the second member 12. A method of fixing the weight member 31 to the tape 32 is not particularly limited, and bonding with an adhesive may be made, for example. The weight member 31 promotes power generation of the power generation body 10A during the rotation of the tire assembly 1 by applying to the power generation body 10A a force that brings the first member 11 and the second member 12 close to each other. It is preferable that the weight member 31 is disposed to overlap over the entirety of the first member 11 and the second member 12 in order to apply force evenly in a surface direction of the power generation body 10A. The material constituting the weight member 31 is not particularly limited, and may be, for example, metal, resin, rubber, or a composite material thereof.

The pushing member 30 is a member that is fixed to the inner surface 200 across the power generation body 10A and the tape 32 along the circumferential direction of the tire 2. That is, both ends of the pushing member 30 along the circumferential direction of the tire 2 are fixed to the inner surface 200 on both sides of the power generation body 10A and the tape 32. Accordingly, the pushing member 30 sandwiches the power generation body 10A and the weight member 31 in a space between itself and the inner surface 200. The pushing member 30 is made of a material deformable as the tire 2 deforms. As a result, during rotation of the tire 2, a shape of the space enclosed with the pushing member 30 and the inner surface 200 changes. Here, the both ends of the pushing member 30 in a width direction (direction along the central axis A1) may not be fixed to the inner surface 200, and the space may be open in the width direction. Moreover, the pushing member 30 of the present embodiment is configured to cover the power generation body 10A and the weight member 31 entirely from inside of the tire assembly 1 in a radial direction.

The pushing member 30 is preferably fixed to the inner surface 200 with a degree of tension that moderately suppresses separation between the first member 11 and the second member 12 of the power generation body 10A while ensuring a sufficient space for the power generation body 10A to deform sufficiently. The pushing member 30 can be fixed so that, when a portion where the power generation body 10A is fixed is placed on a flat surface in the tire assembly 1, for example, a lower surface of the pushing member 30 is away from an upper surface of the weight member 31 by a predetermined distance. The predetermined distance is preferably from 0.05 mm to 5 mm inclusive. A method of fixing the pushing member 30 to the inner surface 200 is not particularly limited, and bonding with an adhesive may be made, for example.

A material constituting the pushing member 30 is preferably a material having flexibility while having a higher tensile strength, and it is preferable to contain at least one of rubber, a thermoplastic elastomer, a thermoplastic resin, and a thermosetting resin. Moreover, from the viewpoint of maintaining a mass balance of the tire assembly 1, it is preferable that the material constituting the pushing member 30 has a lower density. Examples of such a material include a composite material of rubber and a carbon fiber, or carbon fiber rubber (CFR). The pushing member 30 according to the present embodiment is a sheet made of CFR. The CFR sheet with a thickness of 1.0 mm has a specific gravity of approximately 1.12 to 1.16, and a tensile strength of approximately 71.4 MPa to 121.3 MPa.

[Second Unit]

The second unit 4 has a power generation body 10B, a weight member 41, and a tape 42. Since the power generation body 10B has a similar configuration to the power generation body 10A, a detailed construction thereof is to be described later in summary. Similar to the power generation body 10A, the first member 11 and the second member 12 of the power generation body 10B are fixed in a stacked state while being wrapped around with the tape 42. Similar to the weight member 31, the weight member 41 is a plate-shaped member having substantially the same rectangular appearance as the power generation body 10B in plan view. The same explanation applies to the tape 42 and the weight member 41 as to the tape 32 and the weight member 31, respectively, so the explanation again is to be omitted.

The second unit 4 differs from the first unit 3 in that it does not have a pushing member 30, and therefore, it is lighter than the first unit 3 when dimensions and densities of the power generation body 10B and the weight member 41 are same as those of the power generation body 10A and the weight member 31, respectively.

[Rectifier Circuit]

The rectifier circuits 5A and 5B are connected to the power generation bodies 10A and 10B via conductive wires, respectively, and rectify current outputted from the power generation bodies 10A and 10B into a direct current. Each of the rectifier circuits 5A is connected to each of the power generation bodies 10A, and the rectifier circuit 5B is connected to the power generation body 10B. As such, one rectifier circuit is typically connected to one power generation body. There is no particular limitation on the rectifier circuits 5A and 5B, and for example, a circuit using a known diode is adoptable. In the present embodiment, two rectifier circuits 5A and one rectifier circuit 5B are collectively mounted on a single substrate 5, and are fixedly disposed on the inner surface 200 adjacent to the second unit 4. A reason the rectifier circuits 5A and 5B are disposed adjacent to the second unit 4 is to be described later. Current rectified by the rectifier circuits 5A and 5B is transmitted to a power supply control circuit 6 via the conductive wire.

[Power Supply Control Circuit]

The power supply control circuit 6 is connected to the rectifier circuits 5A, 5B, and the system 9. The power supply control circuit 6 is configured to supply current rectified by the rectifier circuits 5A and 5B to the system 9 and also to control operation of the system 9. More specifically, the power supply control circuit 6 has a function of controlling ON/OFF of at least one device included in the system 9, and a function of controlling current supply so that the above device operates stably. The power supply control circuit 6 of the present embodiment is configured to temporarily store the current rectified by the rectifier circuits 5A and 5B in a capacitor, to turn ON at least one device when a voltage of the capacitor reaches or exceeds a predetermined upper limit, and to turn OFF the device when the voltage reaches or falls below a predetermined lower limit. Examples of the device include a sensor, a microcomputer, and a radio communication device. Note that a substrate on which the power supply control circuit 6 is mounted may also have at least one of the above devices or a storage battery, other than the above capacitor, mounted thereon together.

[Weight]

The weights 7A and 7B are disposed for the purpose of suppressing radial force variation (RFV) caused by mass imbalance of tire assembly 1 and suppressing vibrations and noises of tire assembly 1, rather than for the purpose of pressurizing power generation bodies 10A and 10B. In the present embodiment, among the first unit 3, the second unit 4, and the power supply control circuit 6, the second unit 4 has the smallest mass, and the power supply control circuit 6 has the largest mass. Accordingly, in the present embodiment, the weights and the substrate 5 are disposed so as to reduce the mass difference among the first unit 3, the second unit 4, and the power supply control circuit 6 by bringing the masses of first unit 3 and the second unit 4 closer to that of the power supply control circuit 6. Specifically, a weight 7A is disposed adjacent to each of the first units 3, and a weight 7B and the substrate 5 are disposed adjacent to the second unit 4. Note that each of the weights 7A, 7B, and the substrate 5 may be disposed in the vicinity of each of the power generation body units within the range where a "group", which is to be mentioned later, can be regarded as a mass point, and may also be disposed at a distance from each of the power generation body units. The masses of the weights 7A and 7B can be determined appropriately in accordance with the masses of the first unit 3, the second unit 4, the substrate 5 (including the rectifier circuits 5A and 5B), and the power supply control circuit 6.

The material constituting the weights 7A and 7B is not particularly limited, and can be selected as appropriate. Moreover, a method of fixing the weights 7A and 7B to the inner surface 200 is not particularly limited, and it may be, for example, bonding via an adhesive. Note that, the weight 7A may be fixed to a surface of the pushing member 30 toward the central axis A1, rather than being directly fixed to the inner surface 200. In this case, it is preferable that the weight 7A is fixed to a fixing location on the inner surface 200 of the pushing member 30 so as not to avoid deformation of the pushing member 30.

[Arrangement]

A group of the first unit 3 and the weight 7A, a group of the second unit 4, the weight 7B, and the substrate 5, and the power supply control circuit 6 can each be regarded as simulated mass points that are distributed and disposed in the circumferential direction of the tire 2. From the view point of suppressing the vibrations of the tire assembly 1 caused by higher-order components of RFV, it is preferable that the simulated mass points each have a mass (total mass of the components constituting the group) of equal to or less than 30 g if the tire 2 is for passenger automobiles, and of equal to or less than 40 g if the tire 2 is for large automobiles such as trucks and buses. In order to consider the above groups as the mass points, it is preferable that the groups each have a length in the circumferential direction of the tire 2 of 15% or less relative to the entire perimeter of the inner surface 200.

It is preferable that the above simulated mass points are distributed and disposed at four or more locations along the circumferential direction of the tire 2, and it is more preferable that they are distributed and disposed at four to six locations. As a result, primary components of RFV that affect vibration can be distributed near fourth to sixth components, which are less likely to influence both vibration and noise, thereby reducing an undesirable effect caused by the RFV. Moreover, when the simulated mass points are distributed and disposed at N-locations along the circumferential direction of the tire 2, it is preferable that at least one of the simulated mass points is disposed not at a point that divides the tire 2 into N equal parts along the circumferential direction, but at a position that is deviated from the point. For example, in Figs. 2 and 3, assuming that positions where one first unit 3 and one weight 7A are disposed is taken as a reference (0 degree), the second unit 4, the substrate 5, and the weight 7B are disposed at a position of 100 degrees, instead of 90 degrees. Moreover, power supply control circuit 6 is disposed at a position of 275 degrees instead of 270 degrees. Thus, by shifting at least one of the simulated mass points offset from a rotation position of 360°/N on the inner surface 200, it is possible to mitigate peaks of the N-th components of vibrations and noises. Here, it is preferable that a deviation angle from the rotation position of 360°/N is equal to or greater than (0.05 × 360°/N) and equal to or less than (0.26 × 360°/N).

The reference in the circumferential direction of the tire 2 can be set, for example, at the lightest point in the overall mass balance of the tire 2. Then, the positions to dispose the simulated mass points can be determined with an angle from a reference that is measured by placing the tire 2 on a horizontal platform with its outside side facing upward and aligning its center to a predetermined position on the platform.

<3. Power Generation Body>

The power generation bodies 10A and 10B may be composed of elements that all have the same dimensions and materials or differ at least partially from each other in dimensions and materials. The following describes a configuration common to the power generation bodies 10A and 10B. In the following, when the power generation bodies 10A and 10B are not particularly distinguished, they are collectively referred to as a "power generation body 10."

Fig. 4 is a sectional view illustrating a configuration of the power generation body 10 according to this embodiment. As shown in Fig. 4, the power generation body 10 includes a first member 11 and a second member 12, with each member having a stacked structure in this order. The power generation body 10 of the present embodiment has a square shape having elements of the same dimension in plan view, but the shape of the power generation body 10 is not limited to this. The direction of the power generation body 10 during use is not limited to the direction shown in Fig. 4.

[First Member]

The first member 11 has the first base 113, a first electrode 112, and a first insulating film 111 stacked in this order. Elements 111 to 113 of the first member 11 have a square shape of the same dimension in plan view. The first base 113 is constituted by a material having flexibility or a material having viscoelasticity, such as a resin or an elastomer, for example, so as to be deformable by an external force. The first base 113 of the present embodiment is constituted by silicone rubber. A large number of undulations are formed on the surface of the first base 113 that is on the side contacting the first electrode 112. Undulations corresponding to the undulations of the first base 113 are thereby reproduced on a first surface 110 that is formed by the first insulating film 111 via the first electrode 112.

The configuration of the undulations of the first base 113 is not particularly limited. For example, the undulations may be regularly formed over the surface direction of the first base 113, or may be randomly formed to a certain extent. Moreover, a cross-sectional shape of the undulations is not particularly limitative.

The first electrode 112 is a portion for removing electric charge generated in the first insulating film 111 to outside the power generation body 10, and is disposed on a back surface of the first surface 110 so as to contact the first insulating film 111. The first electrode 112 can be constituted by a material having conductivity, and examples of such a material include a conductive film made of Ag, Cu or the like and a conductive fabric. The composition of the conductive fabric is not particularly limited, and may be obtained by metal-plating a non-woven fabric constituted by a polymer material, or by mixing metal fibers with fibers constituted by a polymer material. The first electrode 112 has flexibility and can be deformed in a manner that follows deformation of the first base 113. Also, undulations corresponding to the undulations of the first base 113 are reproduced on the surface of the first electrode 112 that contacts the first insulating film 111.

The first insulating film 111 is a film constituted by an insulator and has flexibility. In the present embodiment, the surface of the first insulating film 111 on the opposite side to the first electrode 112 corresponds to the first surface 110. Undulations corresponding to the undulations of the first base 113 are formed on the first surface 110 by the first base 113. The first surface 110 faces the second surface 120 that is formed by the second insulating film 121 described later, and contacts the second surface 120. The first insulating film 111 is charged with the opposite polarity to the second insulating film 121 when a true contact area, which is an actual contact area between the first surface 110 and the second surface 120, changes due to pressure applied to the power generation body 10. That is, when the second insulating film 121 is positively charged, the first insulating film 111 is negatively charged. Also, when the second insulating film 121 is negatively charged, the first insulating film 111 is positively charged.

A ten-point mean roughness of the first surface 110 is preferably from 100 $\mu$m to 2 mm inclusive. Note that the method of measuring the ten-point mean roughness is compliant with JIS B 0601:2001.

Note that when the first surface 110 and the second surface 120 are described as "contacting" each other, the first surface 110 and the second surface 120 may partially contact, or there may be portions of the first surface 110 and the second surface 120 that do not come into contact with each other. The power generation body 10 of the present embodiment is constituted such that the first surface 110 and the second surface 120 both have a square shape with the same dimension and entirely overlap each other. In other words, in the power generation body 10 of the present embodiment, the first surface 110 the second surface 120 are in contact with each other entirely.

[Second Member]

The second member 12 has a second base 123, a second electrode 122, and a second insulating film 121 stacked in this order. Elements 121 to 123 of the second member 12 have a square shape of the same dimension in plan view. The second base 123 is, similarly to the first base 113, constituted by a material having flexibility or a material having viscoelasticity, such as a resin or an elastomer, for example, so as to be deformable by an external force. The second base 123 of the present embodiment is constituted by silicone rubber. A large number of undulations are formed on the surface of the second base 123 that is on the side contacting the second electrode 122. Undulations corresponding to the undulations of the second base 123 are thereby reproduced on a second surface 120 that is formed by the second insulating film 121 via the second electrode 122.

The configuration of the undulations of the second base 123 is not particularly limited. For example, the undulations may be regularly formed over the surface direction of the second base 123, or may be randomly formed to a certain extent. Moreover, a cross-sectional shape of the undulations is not particularly limitative.

The second electrode 122 is a portion for removing electric charge generated in the second insulating film 121 to outside the power generation body 10, and is disposed on a back surface of the second surface 120 so as to contact the second insulating film 121. The second electrode 122 can be constituted by a material having conductivity, and examples of such a material include a conductive film made of Ag, Cu or the like and a conductive fabric. The composition of the conductive fabric is not particularly limited, and may be obtained by metal-plating a non-woven fabric constituted by a polymer material, or by mixing metal fibers with fibers constituted by a polymer material. The second electrode 122 has flexibility and can be deformed in a manner that follows deformation of the second base 123. Also, undulations corresponding to the undulations of the second base 123 are reproduced on the surface of the second electrode 122 that contacts the second insulating film 121.

The second insulating film 121 is a film constituted by a different insulator from the first insulating film 111 and has flexibility. In the present embodiment, the surface of the second insulating film 121 on the opposite side to the second electrode 122 corresponds to the second surface 120. Undulations corresponding to the undulations of the second base 123 are formed on the second surface 120 by the second base 123. The second surface 120 faces the first surface 110 that is formed by the first insulating film 111, and contacts the first surface 110. The second insulating film 121 is charged with the opposite polarity to the first insulating film 111 when a true contact area between the first surface 110 and the second surface 120 changes due to pressure applied to the power generation body 10. That is, when the first insulating film 111 is positively charged, the second insulating film 121 is negatively charged. Also, when the first insulating film 111 is negatively charged, the second insulating film 121 is positively charged.

A ten-point mean roughness of the second surface 120 is preferably from 100 $\mu$m to 2 mm inclusive. Note that the method of measuring the ten-point mean roughness is compliant with JIS B 0601:2001.

[Material and the like]

The materials constituting the first insulating film 111 and the second insulating film 121 can be selected from a group consisting of, for example, diamondlike carbon (DLC), perfluoropolyether, polymethyl methacrylate, nylon, polyvinyl alcohol, polyester, polyisobutylene, polyurethane (PU), polyethylene terephthalate, polyvinyl butyral, polychloroprene, natural rubber, polyacrylonitrile, polydiphenyl carbonate, chlorinated polyether, polyvinylidene chloride, polystyrene, polyethylene, polypropylene, polyimide, polyvinyl chloride, polydimethylsiloxane, polytetrafluoroethylene, a copolymer of ethylene tetrafluoride and propylene hexafluoride, a copolymer of tetrafluoroethylene and hexafluoropropylene (FEP), or a material whose main component is another fluorocarbon organic compound.

From the viewpoint of increasing the electromotive force of the power generation body 10, a pair of materials that are far apart in the triboelectric series are preferably selected from the above group. Note that a configuration may be adopted in which one of the first insulating film 111 and the second insulating film 121 is positively charged and the other is negatively charged. In the present embodiment, one of the first insulating film 111 and the second insulating film 121 is constituted by polyimide, and the other of the first insulating film 111 and the second insulating film 121 is constituted by nylon. One constituted by polyimide is negatively charged, while one constituted by nylon is positively charged.

Preferably, at least one of a thickness W1 of the first insulating film 111 and a thickness W2 of the second insulating film 121 is not more than 20 $\mu$m. More preferably, both the thickness W1 and the thickness W2 are not more than 20 $\mu$m. Note that the diagrams do not necessarily reflect the actual dimensions of the elements of the power generation body 10.

[Charging Principle of Power Generation Body 10]

The first insulating film 111 and the second insulating film 121 are charged by operating in the following manner. As shown in Fig. 4, both the first surface 110 and the second surface 120 of the present embodiment have undulations, and even when external pressure is not applied to the power generation body 10, these surfaces do not completely separate and remain partially in contact with each other. At this time, the distance between a mean surface of the first surface 110 and a mean surface of the second surface 120 (mean inter-surface interval) is comparatively large, and is equivalent to the true contact area between the first surface 110 and the second surface 120 being comparatively small.

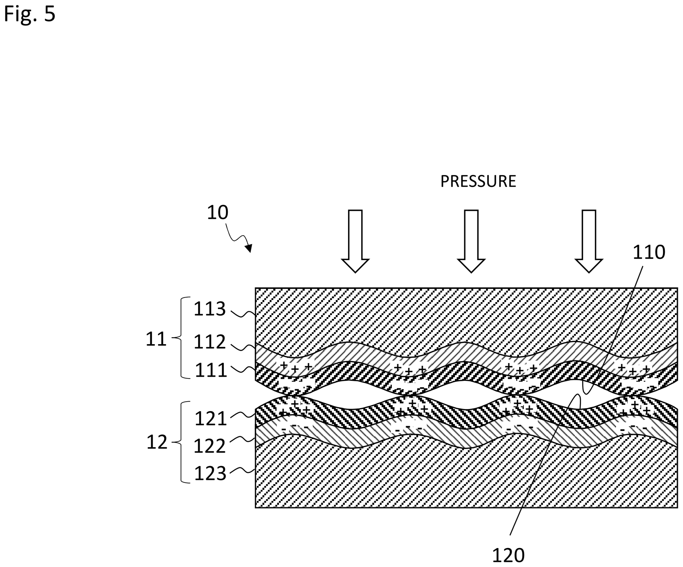

Next, when pressure is applied to the power generation body 10 such that the first insulating film 111 and the second insulating film 121 move toward each other, the shapes of the first surface 110 and the second surface 120 change so that undulations become slightly flatter as shown in Fig. 5, and the mean inter-surface interval decreases. In other words, the true contact area increases. Moreover, when the pressure applied to the power generation body device 10 is removed, the first insulating film 111 and the second insulating film 121 move away from each other again, and the mean inter-surface interval increases. In other words, the true contact area of the first surface 110 and the second surface 120 decreases. In this way, when the true contact area changes, the charged amount of the first insulating film 111 and the second insulating film 121 increases from an initial state, and more electric charge is induced in the first electrode 112 and the second electrode 122.

Note that, in a configuration where undulations are formed on at least one of the first surface 110 and the second surface 120, the true contact area also changes to a certain extent due to the first insulating film 111 and the second insulating film 121 moving relative to each other in the surface direction. Accordingly, out of the forces that are applied to the power generation body 10, not only forces that are applied in a direction that increases or decreases the mean inter-surface interval but also forces that cause the first insulating film 111 and the second insulating film 121 to slide relative to each other in the surface direction contribute to the power generation of the power generation body 10.

<4. Operation Principle of Tire Assembly>

The first unit 3 and the second unit 4 of the tire assembly 1 exhibit different behaviors according to the rotation speed of the tire assembly 1. This allows a stabilized amount of generated power of the tire assembly 1 over a wider rotation speed region. The following describes a reason for this.

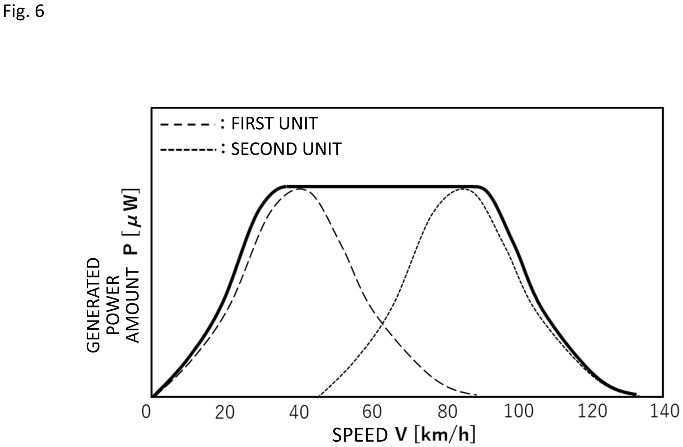

The Inventors prepared a tire assembly with only the first unit 3 and a tire assembly with only the second unit 4, and measured a generated power amount P [$\mu$W] in each of the tire assembly at rotation speeds V equivalent to 20 to 120 km/h. As a result, the Inventors found that there is a significant difference in the speed region of the tire assembly between the first unit 3 and the second unit 4 where peaks of the generated power P appear. Fig. 6 is a V-P graph representing this schematically. As is seen from Fig. 6, the generated power amount P of the first unit 3 is larger, and the peak of the power generation P of the first unit 3 appears in the speed region of 20 to 60 km/h. On the other hand, in the speed region of 60 km/h or more, the generated power amount P of the second unit 4 exceeds the generated power amount P of the first unit 3, and the peak of the generated power amount P of the second unit 4 appears.

This indicates that in a low-speed region (60 km/h or less), the presence of the pushing member 30 contributes to an increase in change amount of the true contact area of the power generation body 10, while in a high-speed region (60 km/h or more), deformation of the power generation body 10 is restricted by the pushing member 30, resulting in decrease in change amount of the true contact area. In other words, the true contact area of the power generation body 10 incorporated in the tire 2 changes primarily due to change in strain of the tire 2, or primarily due to change in radial acceleration (or centrifugal force) occurring in the tire 2. It can be said that in the low-speed region where the change in radial acceleration is relatively small, it is preferable to induce the deformation of the power generation body 10 by the pushing member 30, while in the high-speed region where the change in radial acceleration is relatively large, it is preferable not to restrict the deformation of the power generation body 10 by the pushing member 30.

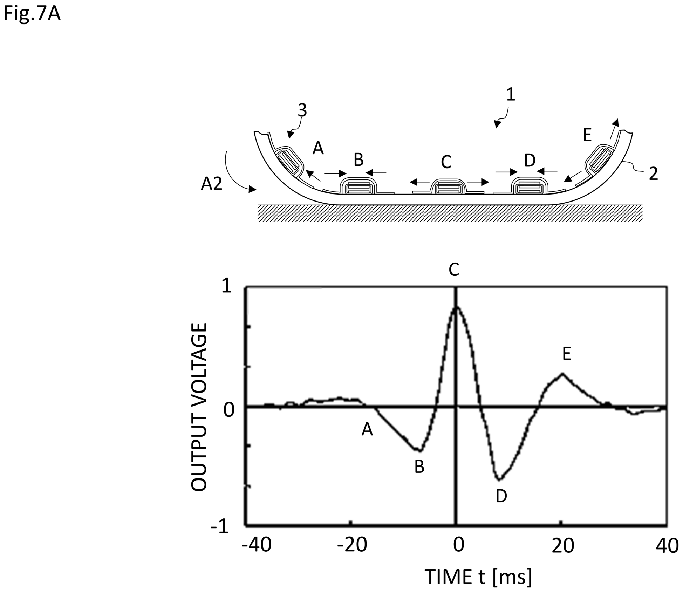

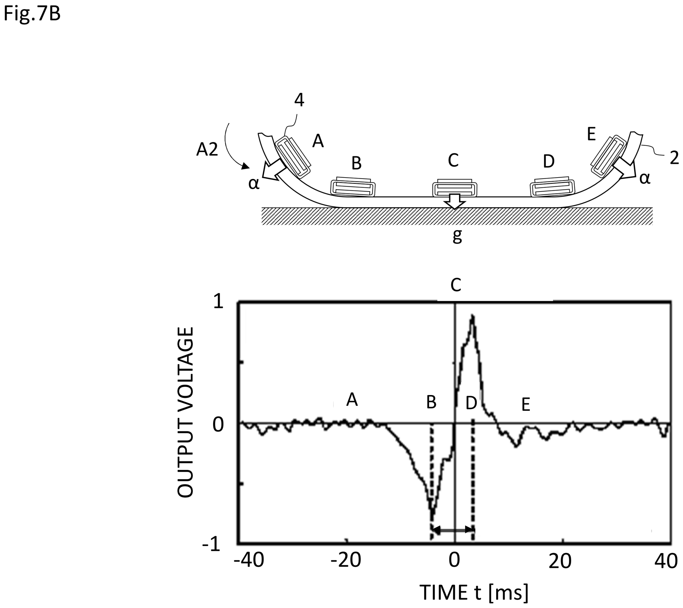

Based on the above, the Inventors have designed the tire assembly 1 to include both the first unit 3 and the second unit 4. Fig. 7A is a diagram explaining the behavior of the first unit 3 as it moves through positions A to E in Fig. 7A in a direction of arrow A2 when the tire assembly 1 rotates on the traveling surface. Fig. 7B is a diagram explaining the behavior of the second unit 4 as it moves through positions A to E in Fig. 7B when the tire assembly 1 rotates on the traveling surface in a direction of arrow A2. A position A is a position just before the tire 2 makes contact with the ground, and a position B is a position immediately after the tire 2 has made contact with the ground. A position C corresponds to the center of a ground surface of the tire 2 in the circumferential direction. A position D is a position just before the tire 2 leaves the traveling surface, and a position E is a position immediately after the tire 2 has left the traveling surface. In graphs in Figs. 7A and 7B, the time when the first unit 3 or the second unit 4 is present at the position C is set as time t = 0. In these graphs, the rotation speed of the tire assembly 1 is equivalent to 40 to 50 km/h. Here, in these graphs, output voltage values are each normalized.

As shown in Fig. 7A, an output voltage of the first unit 3 reaches the maximum peak at the position C. This conceives the following. First, from the position A to the position B, the pushing member 30 is compressed in the circumferential direction in conjunction with the strain of the tire 2, whereby the first surface 110 and the second surface 120 of the power generation body 10A separate. Then, at the position C, the tire 2 extends circumferentially, and in conjunction with this, the pushing member 30 is rapidly pulled on both sides, resulting in approaching of the first surface 110 and the second surface 120. Subsequently, from the position D to the position E, the pushing member 30 is again compressed in the circumferential direction in conjunction with the strain of the tire 2, resulting in separation of the first surface 110 and the second surface 120. Thus, in the first unit 3, a direction of force applied to the pushing member 30 is reversed at the position C, whereby the output voltage is considered to reach the maximum peak at the position C. That is, in the first unit 3, the change of the strain of the tire 2 in the circumferential direction becomes a dominant factor in the change of the true contact area of the power generation body 10A.

On the other hand, as shown in Fig. 7B, the second unit 4 has output voltage absolute values that reach opposite peaks at the positions B and D, which shifts phases with respect to the first unit 3. This conceives the following. From the position A to the position B, a radial acceleration $\alpha$ is applied to the weight member 41, and the true contact area changes in a direction where the first surface 110 and the second surface 120 approach. Next, from the position B through the position C to the position D, gravitational acceleration g is mainly applied to the weight member 41, and the first surface 110 and the second surface 120 rapidly separate. The degree of such separation is greater in absence of the pushing member 30. This results in the largest change in the true contact area from the position B to the position D. Next, from the position D to the position E, a radial acceleration $\alpha$ again starts to be applied to the weight member 41, and the true contact area changes. That is, in the second unit 4, the change of the radial acceleration of the tire 2 (or centrifugal force) becomes a dominant factor in the change of the true contact area of the power generation body 10B. Since the change in the radial acceleration becomes greater as the rotation speed of the tire assembly 1 becomes higher, it can be said that the change in the true contact area of the power generation body 10B is greater at the higher rotation speed.

As described above, the tire assembly 1 includes the different first unit 3 and second unit 4, whereby a sufficient generated power amount is achieved over a wider speed range.

B. Second Embodiment

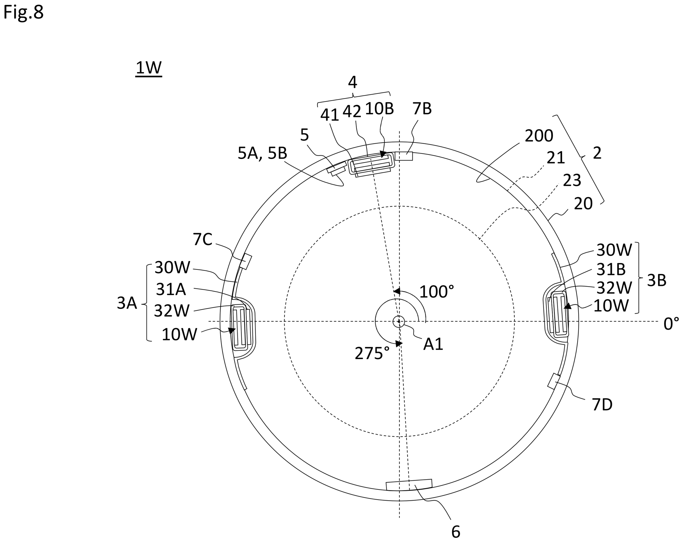

Fig. 8 is a longitudinal sectional view of a tire assembly 1W according to a second embodiment. The tire assembly 1W of this embodiment differs from tire assembly 1 in that two first units correspond to a first unit 3A and a first unit 3B. The tire assembly 1W is to be described below, focusing on differences from tire assembly 1, and the same components common in configuration to the tire assembly 1 are denoted by the same reference signs and description thereof is to be omitted.

The first unit 3A has a power generation body 10W, a pushing member 30W, a weight member 31A, and a tape 32W. These have the same functions as the power generation body 10A, the pushing member 30, the weight member 31, and the tape 32 of the first unit 3, respectively, and their assembly manner is common to the first unit 3. The first unit 3B has a power generation body 10W, a pushing member 30W, a weight member 31B, and a tape 32W. These also have the same functions as the power generation body 10A, the pushing member 30, the weight member 31, and the tape 32 of the first unit 3, respectively, and their assembly manner is common to the first unit 3. However, a mass M1 of the weight member 31A is larger than a mass M2 of the weight member 31B. That is, M1 > M2. Therefore, in the tire assembly 1W, a weight 7C is disposed adjacent to the first unit 3A and a weight 7D is disposed adjacent to the first unit 3B to correct mass imbalance of tire assembly 1W. The weight 7C is lighter than the weight 7D.

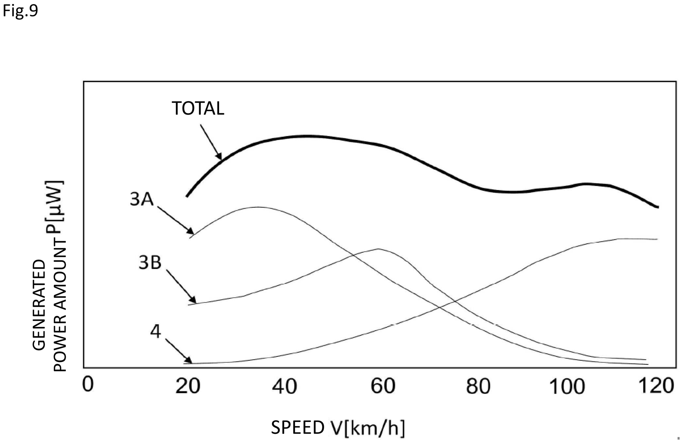

Fig. 9 is a V-P graph schematically representing a rotation speed V (equivalent to km/h) of the tire assembly 1W, generated power amounts P [$\mu$W] of the first unit 3A, the first unit 3B, and the second unit 4 in the tire assembly 1W, and a total generated power amount based on tests conducted by the Inventors. As shown in Fig. 9, a peak of the generated power amount P of the first unit 3A appears around 30 to 40 km/h, a peak of the generated power amount P of the first unit 3B appears around 60 km/h, and a peak of the generated power amount P of the second unit 4 appears around 90 to 100 km/h. In such a manner, the first unit 3A, the first unit 3B, and the second unit 4 each exhibit the peak of the generated power amount P in accordance with the different rotation speed regions. This allows the entire tire assembly 1W to maintain a more stable generated power amount compared to the tire assembly 1, especially in the speed range around 60 km/h. According to the Inventors' study, when each of the different power generation body units is separately incorporated into a tire and the generated power amount P is measured relative to the rotation speed V of the tire assembly, V-P characteristics of the entire tire assembly can be estimated by superimposing the respective generated power amounts P.

The behavior of the first unit 3A and the first unit 3B when the tire assembly 1W rotates is similar to that of the first unit 3 shown in Fig. 7A. As described above, power generation of the first unit 3 is mainly due to circumferential strain of the tire 2, and the peak of the generated power amount generally appears in the low speed region of 60 km/h or less. However, even in a region of relatively high speed (e.g., 40 to 60 km/h) in the above low speed region, a ratio of contribution of change in the radial acceleration of the tire 2 to change in the true contact area of the power generation body 10X gradually increases. Accordingly, in the relatively high speed region, the lighter weight member can suppress the extent to which the change in the radial acceleration contributes to the change in the true contact area of the power generation body 10W and can maintain relatively large contribution of the change in the strain of the tire 2. In addition, a higher natural frequency of the first unit results in more active changes in the true contact area in the relatively high speed region. As a result, even with the first unit having the same structure, if the mass of the weight member is reduced, the speed region where the generated power amount reaches its peak can be adjusted to a high speed side. Conversely, if the mass of the weight member is increased, the speed region where the generated power amount reaches its peak can be adjusted to the lower speed side.

According to the Inventors' study, it is preferable that the ratio (M2/M1) is $1/4 \le (M2/M1) \le 1/3$ in order to peak the generated power amount of the first unit 3A in the speed region of 20 to 40 km/h, and to peak the generated power amount of the first unit 3B in the speed region of 50 to 60 km/h. The reason therefor is due to the change in the natural frequencies of the first units. In the first unit 3A, a natural frequency $f_n$ at which the weight member 31A bounces is expressed by the following mathematical expression. In the expression, k is a constant.

Expression 1

$$f_n = \frac{1}{2\pi}\sqrt{\frac{k}{M1}}$$

On the other hand, if M2 = n × M1, a natural frequency $f_{bn}$ of the first unit 3B is expressed by the following mathematical expression.

Expression 2

$$f_{bn} = \frac{1}{2\pi}\sqrt{\frac{k}{M2}} = \frac{1}{2\pi}\sqrt{\frac{k}{n \times M1}} = \frac{1}{\sqrt{n}}f_n$$

From this, assuming that the speed at which the generated power amount of the first unit 3A reaches its peak as V (km/h equivalent), the speed Vb at which the generated power amount of the first unit 3B reaches its peak can be expressed by the following mathematical expression.

Expression 3

$$Vb = \frac{1}{\sqrt{n}}V$$

From the above, if V = 30, for example, setting M2 to be 1/3 to 1/5 of M1 theoretically obtains Vb to be from 52 to 67 km/h. However, if M2 is less than one-third of M1, rigidity of the first unit 3B decreases, causing actual Vb not to exceed 60 km/h and to tend to move to the lower speed side. Moreover, setting M2 = 0 results in an overall decrease in generated power amount, and thus it is undesirable to make M2 too small. Therefore, preferably by setting $1/4 \le (M2/M1) \le 1/3$, it is possible to stabilize the generated power amount of the entire tire assembly 1W over a wider speed region and to improve V-P characteristics of the tire assembly 1W. Moreover, dimensions of components of the power generation body 10W are each assumed to be common between the first unit 3A and the first unit 3B.

C. Third Embodiment

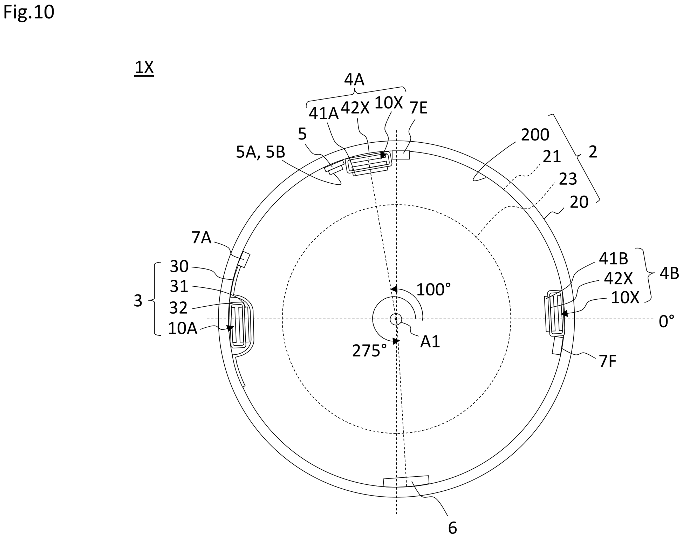

Fig. 10 is a longitudinal sectional view of a tire assembly 1X according to a third embodiment. The tire assembly 1X of this embodiment differs from the tire assembly 1 in that it includes one first unit 3, one second unit 4A, and one second unit 4B. The tire assembly 1X is to be described below, focusing on differences from tire assembly 1, and the same components common in configuration to the tire assembly 1 are denoted by the same reference signs and description thereof is to be omitted.

The second unit 4A has a power generation body 10X, a weight member 41A, and a tape 42X. These also have the same functions as the power generation body 10B, the weight member 41, and the tape 42 of the second unit 4, respectively, and their assembly manner is common to the second unit 4. The second unit 4B has a power generation body 10X, a weight member 41B, and a tape 42X. These also have the same functions as the power generation body 10B, the weight member 41, and the tape 42 of the second unit 4, respectively, and their assembly manner is common to the second unit 4. However, a mass M3 of the weight member 41A is smaller than a mass M4 of the weight member 41B. In other words, M3 < M4. Weights 7E and 7F are disposed appropriately in the vicinity of the second unit 4A and the second unit 4B, respectively, to correct mass imbalance of the tire assembly 1X. Here in the tire assembly 1X, a substrate 5 with one rectifier circuit 5A and two rectifier circuits 5B is disposed adjacent to the second unit 4A, so that masses of the weights 7E and 7F are set considering masses of the substrate 5 and the rectifier circuits 5A and 5B. The rectifier circuit 5A is connected to the power generation body 10A, and the rectifier circuits 5B are each connected to the power generation body 10X of the second unit 4A or 4B.

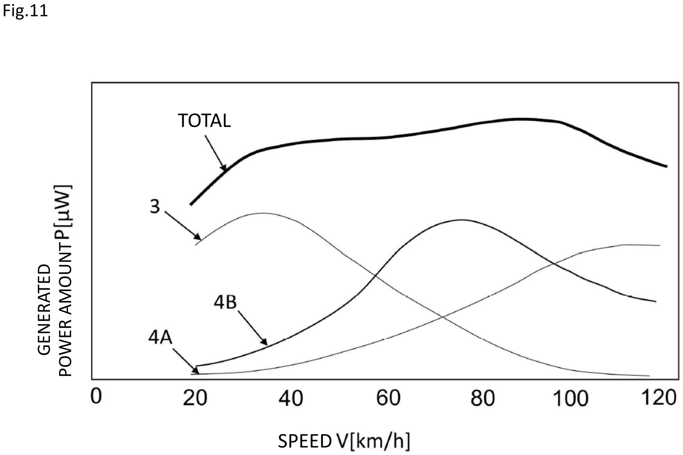

Fig. 11 is a V-P graph schematically representing a rotation speed V (equivalent to km/h) of the tire assembly 1X, generated power amounts P [$\mu$W] of the first unit 3, the second unit 4A, and the second unit 4B in the tire assembly 1X, and a total generated power amount based on experiments conducted by the Inventors. As shown in Fig. 11, a peak of the generated power amount P of the first unit 3 appears around 30 to 40 km/h, a peak of the generated power amount P of the second unit 4B appears around 60 to 80 km/h, and a peak of the generated power amount P of the second unit 4A appears around 90 to 100 km/h. In such a manner, the first unit 3, the second unit 4A, and the second unit 4B each exhibit the peak of the generated power amount P in accordance with the different rotation speed regions. This allows the entire tire assembly 1X to maintain a more stable generated power amount compared to the tire assembly 1 in the speed range around 60 km/h.

The behavior of the second unit 4A and the second unit 4B when the tire assembly 1X rotates is similar to that of the second unit 4 shown in Fig. 7B. As described above, power generation of the second unit 4 is mainly due to change in radial acceleration (or centrifugal force) generated on the tire 2. In the second unit 4B with the weight member 41B of a larger mass, a larger radially acceleration is applied to the power generation body 10X, so that the true contact area basically tends to change more easily. In addition, as the natural frequency of the second unit 4B further decreases, the true contact area changes actively even in a relatively low speed region (e.g., 60 to 80 km/h) within the above high speed region. On the other hand, in a relatively high speed region (e.g., 80 km/h or more) in the above high speed region, followability deteriorates, and the true contact area is less likely to change, so that the generated power amount reaches its peak in the speed region of 60 to 80 km/h. As a result, even with the second unit having the same structure, if the mass of the weight member is increased, the speed region where the generated power amount reaches its peak can be adjusted to the lower speed side. Conversely, if the mass of the weight member is decreased, the speed region where the generated power amount reaches its peak can be adjusted to a high speed side.

According to the Inventors' study, $1.5 \leq (M4/M3) \leq 8$ is preferable in order to peak the generated power amount of the second unit 4A in the speed region of 80 km/h or more, and to peak the generated power amount of the second unit 4B in the speed region of 60 to 80 km/h. Accordingly, it is possible to stabilize the generated power amount of the entire tire assembly 1X over a wider speed region and to improve V-P characteristics of the tire assembly 1X. Moreover, dimensions of components of the power generation body 10X are each assumed to be common between the second unit 4A and the second unit 4B.

D. Fourth Embodiment

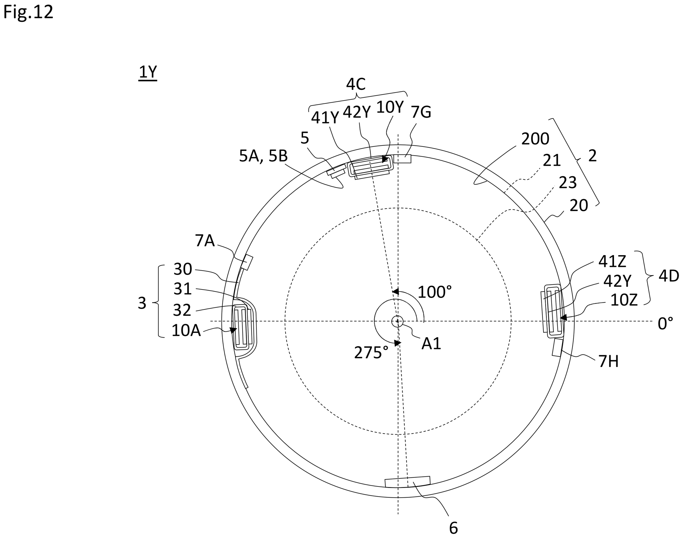

Fig. 12 is a longitudinal sectional view of a tire assembly 1Y according to a fourth embodiment. The tire assembly 1Y of this embodiment differs from tire assembly 1 in that it includes one first unit 3, one second unit 4C, and one second unit 4D. The tire assembly 1Y is to be described below, focusing on differences from tire assembly 1, and the same components common in configuration to the tire assembly 1 are denoted by the same reference signs and description thereof is to be omitted.

The second unit 4C has a power generation body 10Y, a weight member 41Y, and a tape 42Y. These also have the same functions as the power generation body 10B, the weight member 41, and the tape 42 of the second unit 4, respectively, and their assembly manner is common to the second unit 4. The second unit 4D has a power generation body 10Z, a weight member 41Z, and a tape 42Y. These also have the same functions as the power generation body 10B, the weight member 41, and the tape 42 of the second unit 4, respectively, and their assembly manner is common to the second unit 4. The power generation body 10Y has a first surface and a second surface each with an area of S1, and the power generation body 10Z has a first surface and a second surface each with an area of S2, where S1 < S2. Moreover, the weight members 41Y and 41Z are formed to match sizes of the power generation bodies 10Y and 10Z, respectively, and have principal surfaces (surfaces perpendicular to a radial direction of the tire 2) with areas approximately corresponding to S1 and S2, respectively. Here, the weight members 41Y and 41Z are configured to have the same mass per unit area. Weights 7G and 7H are disposed appropriately in the vicinity of the second units 4C and 4D, respectively, to correct mass imbalance of tire assembly 1Y. Here in the tire assembly 1Y, a substrate 5 with one rectifier circuit 5A and two rectifier circuits 5B is disposed adjacent to the second unit 4C, so that masses of the weights 7G and 7H are set considering masses of the substrate 5 and the rectifier circuits 5A and 5B. The rectifier circuit 5A is connected to the power generation body 10A, and the rectifier circuits 5B are each connected to the power generation body 10Y or the power generation body 10Z.

According to the Inventors' study, even when a plurality of second units include at least one second power generation body unit having the first surface and the second surface each with the area of S1 and at least one second power generation body unit having the first surface and the second surface each with the area of S2, the V-P characteristics of the tire assembly 1Y can be the V-P characteristic as shown in Fig. 11.

According to the Inventors' study, $1.5 \leq (S2/S1) \leq 16$ is preferable in order to peak the generated power amount of the second unit 4A in the speed region of 80 km/h or more, and to peak the generated power amount of the second unit 4B in the speed region of 60 to 80 km/h. Thus, increasing the area achieves a large generated power amount of the second unit 4B itself. Moreover, as bending rigidity of the power generation body 10Z decreases compared to bending rigidity of the power generation body 10Y, natural frequency of the second unit 4B decreases compared to natural frequency of the second unit 4A, causing the speed region where the generated power amount of the second unit 4B peaks to shift to the low speed side. Accordingly, it is possible to stabilize the generated power amount of the entire tire assembly 1Y over a wider speed region and to improve V-P characteristics of the tire assembly 1Y. It should be noted that the Inventors have confirmed that the areas of the first and second surfaces are not necessarily proportional to the generated power amounts, and that the generated power amounts reach a ceiling when the above areas each fall between approximately 8,000 mm$^2$ and 10,000 mm$^2$. Moreover, the mass per area of the weight member is assumed to be common between the second unit 4C and the second unit 4D.

<5. Features>

(1) With the tire assembly 1 according to the embodiments described above, the first unit 3 and the second unit 4, which have different deformation mechanisms of the power generation body 10, can ensure the generated power amount in a wider speed range of the tire assembly 1. This allows a stable supply of power to the systems and devices connected to the first unit 3 and second unit 4 while the vehicle 8 having the tire assembly 1 mounted thereon travels.

(2) With the tire assembly 1 according to the embodiments described above, the first unit 3, the second unit 4, and the power supply control circuit 6 are distributed and disposed at N locations (where, $N \geq 4$) along the circumferential direction of the tire 2. In addition, at least one of these elements is disposed at a position deviated from a point that divides the inner surface 200 into N equal parts along the circumferential direction. This disperses a first-order component of RFV into Nth-order components and mitigates a Nth-order peak of RFV, thereby suppressing vibrations and noises caused by incorporation of the first unit 3, the second unit 4, the power supply control circuit 6, and the like, into the tire 2.

(3) With the tire assembly 1 according to the embodiments described above, mass difference among the first unit 3, the second unit 4, and the power supply control circuit 6, which are distributed and disposed at N locations, are reduced by the weights 7A and 7B. This enables suppression in increase of RFV in the tire assembly 1. Moreover, by disposing the rectifier circuits 5A and 5B in the vicinity of the second unit 4, which has the smallest mass among the first unit 3, the second unit 4, and the power supply control circuit 6, the mass difference described above can be further reduced. That is, since the rectifier circuits 5A and 5B can function as a weight, further suppression in increase of RFV in the tire assembly 1 can be achieved. Moreover, if the rectifier circuits 5A and 5B are disposed in the vicinity of the first unit 3, more weights are required to reduce the mass difference with the second unit 4, resulting in an increase in overall mass of the tire assembly 1. Accordingly, disposing the rectifier circuits 5A and 5B in the vicinity of the second unit 4, which has a relatively small mass, also contributes to suppression in the increase of the overall mass of the tire assembly 1.

(4) With the tire assembly 1 according to the embodiments described above, the mass per simulated mass point is set to be 30 g or less if the tire 2 is for passenger automobiles, and 40 g or less if the tire 2 is for large automobiles such as trucks and buses. This also enables suppression in the increase of RFV in the tire assembly 1.

(5) In the tire assembly 1 according to the embodiments described above, the pushing member 30 is primarily made of a composite material of rubber and carbon fibers. Accordingly, it is possible to reduce the mass while maintaining a tensile strength that favorably compares with a case where the pushing member 30 is primarily made of rubber.

(6) In the tire assemblies 1W to 1Y according to the embodiments described above, it is possible to generate more stable power even in the speed range around 60 km/h, (e.g., 50 to 80 km/h) where the generated power amount tends to decrease compared to the tire assembly 1. In addition, similar to the tire assembly 1, the tire assemblies 1W to 1Y can achieve the effects described in (1) to (5).

<6. Modifications>

Although each of the embodiments of the present invention has been described, the invention is not limited to the above embodiments, and various changes can be made without departing from the spirit of the invention. For example, the following changes are possible. Also, the gists of the following modifications can be combined as appropriate.

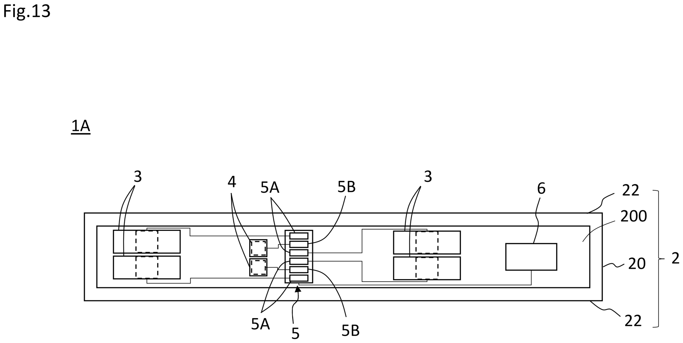

(1) The numbers of the first units 3 and the second units 4 are not limited to those of the above embodiments, and can be changed as appropriate. That is, the tire assembly 1 only needs to include at least one first unit 3 and at least one second unit 4. For example, like the tire assembly 1A shown in Fig. 13, a plurality of first units 3 and a plurality of second units 4 may each be disposed along the width direction of the inner surface 200 (in a direction parallel to the central axis A1). Also, the first units 3 and the second units may be disposed in the same circumferential direction of the inner surface 200. Moreover, the tire assembly 1W may include a plurality of first units, and a plurality of first power generation body units may include at least one first power generation body unit having a weight member with a mass of M1 disposed between the power generation body and the pushing member, and at least one first power generation body unit having a weight member with a mass of M2 disposed between the power generation body and the pushing member, where M1 > M2. A tire assembly 1X may include a plurality of second power generation body units, and the second power generation body units each may include at least one second power generation body unit having a weight member with a mass of M3 and at least one second power generation body unit having a weight member with a mass of M4, where M3 < M4. A tire assembly 1Y may include a plurality of second power generation body units, and the second power generation body units each may include at least one second power generation body unit having the first surface and the second surface with an area S1 and at least one second power generation body unit having the first surface and the second surface with an area S2, where S1 < S2.

(2) The configurations of the rectifier circuits 5A and 5B and the power supply control circuit 6 are not limited to those in the embodiments described above. For example, at least one of the rectifier circuits 5A and 5B may be mounted on the same substrate where the power supply control circuit 6 is mounted. Moreover, the power supply control circuit 6 may be composed of a plurality of substrates divided by functions (a function for controlling ON/OFF of the devices, a function for controlling current supply, and a function for energy storage), for example. A plurality of substrates may constitute a single simulated mass point or may be disposed so as to constitute two or more simulated mass points. Moreover, the devices included in the system 9 may be disposed on the inner surface 200 independently of the rectifier circuits 5A and 5B and the power supply control circuit 6. In other words, the rectifier circuits 5A and 5B, the power supply control circuit 6, and the devices included in the system 9 may be implemented in any configuration. Also, elements constituting a single simulated mass point can be combined as appropriate.

(3) The first electrode 112 may be configured by weaving conductive fibers into a woven fabric shape. The fibers can, for example, be Cu wires or stainless steel wires having flexibility. Moreover, the first surface 110 may be formed by covering the outer peripheral surface of the fibers with the first insulating film 111. Similarly, the second electrode 122 may be configured by weaving conductive fibers into a woven fabric shape, or the second surface 120 may be formed by covering the outer peripheral surface of the fibers with the second insulating film 121. The fibers can, for example, be Cu wires or stainless steel wires having flexibility.

(4) In the first unit 3 and the second unit 4 of the embodiments described above, the weight member 31 and the weight member 41 are disposed outside the tape 32 and the tape 42, respectively. The weight member 31 and the weight member 41 may be disposed inside the tape 32 and the tape 42, respectively. Moreover, the tape 32 and the tape 42 may each be changed to be different from above, such as a bagshaped member. This is applicable to the first unit 3A, the first unit 3B, and the second units 4A to 4D in the embodiments described above.

(5) The control device 80 is not necessarily a computer built into or installed in the vehicle 8. The control device 80 may be a portable information processing terminal such as a smartphone, a tablet, or a notebook PC.

(6) The first unit 3, the second unit 4, the rectifier circuits 5A and 5B, and the power supply control circuit 6 may be distributed and disposed at two to three locations along the circumferential direction of the tire 2, or may be distributed and disposed at five locations, or may be distributed and disposed at seven or more locations. Moreover, the rectifier circuits 5A and 5B and the power supply control circuit 6 may be omitted where appropriate. This is applicable to the tire assemblies 1W to 1Y.

(7) The weight member 31 of the first unit 3 may be omitted.

(8) In the embodiments described above, the mass per area of the weight member is the same between the second unit 4C and the second unit 4D, but the mass per area of the weight member may be different. That is, the V-P characteristics of the tire assembly 1Y may be adjusted by differing the mass per unit area of the weight member in addition to varying the areas of the first surface and the second surface between the second unit 4C and the second unit 4D.

EXAMPLES

The following shows tests conducted by the inventors and results thereof. However, the present invention is not limited thereto.

<Test 1>

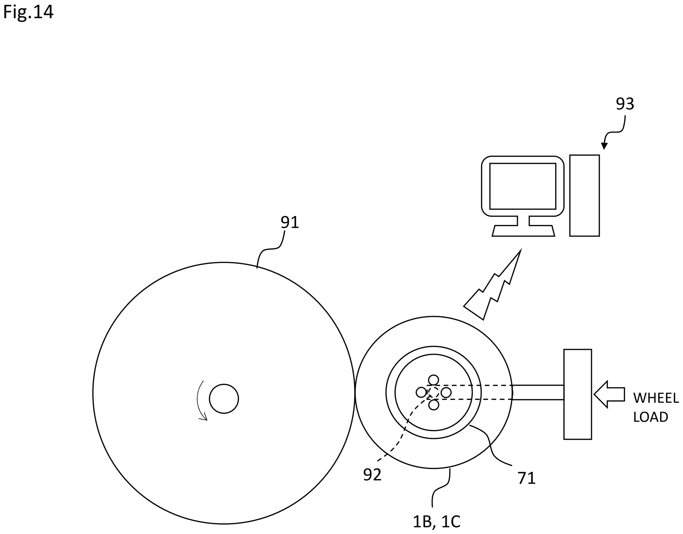

As in the first embodiment described above, a tire assembly 1B (working example) is prepared including two first units, one second unit, rectifier circuits, and a power supply control circuit. The power supply control circuit is connected to an air pressure sensor that operates by receiving power supply from the first unit and the second unit. The air pressure sensor is configured to be connected to an external device 93 (general-purpose computer) to be capable of radio communication when its power is ON. Moreover, a tire assembly 1C (comparative example) having the same configuration as the tire assembly 1B, except for lack of a second unit, is also prepared. Same wheels 71 are each attached to the tire assemblies 1B and 1C, and the air pressure is set to be the same. The tire assemblies 1B and 1C with the wheels 71 are each mounted on a rotary shaft 92 of a testing device as shown in Fig. 14, and are rotated on a rotating drum 91 at a speed corresponding to 20 to 80 km/h under a same wheel load. While the tire assemblies 1B and 1C are rotated, the external device 93 activates each of the air pressure sensors to check operation (that is, whether radio communication is present from the air pressure sensors). Moreover, time intervals of radio communication by the air pressure sensors are also measured. The time interval for the air pressure sensor to perform radio communication corresponds to a time interval until a certain amount of electric power is stored in the power supply control circuit.

<Result 1>

In the tire assembly 1B, the time to confirm activation of the air pressure sensor is comparable in the speed region corresponding to 60 to 80 km/h to that in the speed region corresponding to 20 to 60 km/h. Subsequently, it is confirmed that the air pressure sensor operates stably over the entire speed region corresponding to 20 to 80 km/h in the tire assembly 1B. On the other hand, in the tire assembly 1C, it is confirmed that there are no problems with the activation and operation of the air pressure sensor in the low speed region, but as the speed approaches 60 km/h, it takes longer time to confirm the activation of the air pressure sensor. Moreover, it is not confirmed that the air pressure sensor activates in the speed region of 60 km/h or more within a pre-assumed time. Accordingly, it is confirmed that the tire assembly according to the embodiments described above can generate power over a wider speed region.

<Test 2>

A tire assembly with the first unit according to the embodiments described above being fixed to the inner surface of the tire is prepared as a reference tire assembly. The reference tire assembly is incorporated into the testing device shown in Fig. 14 and is rotated under predetermined air pressure and wheel load conditions to confirm that a generated power amount of the first unit peaks at a speed of 30 km/h. The first unit includes a power generation body in a square shape with a side length of 35 mm, a weight member having a mass of 2.7 g, and a pushing member. Next, prepared are tire assemblies in which the power generation body, the pushing member, and the tire each have common configurations, but masses of the weight members are each 1/3 times (0.9 g) and 1/4 times (0.675 g) that of the reference tire assembly, respectively, and a tire assembly in which the weight member is omitted. Each of the tire assemblies is incorporated into the testing device described above and is rotated at speeds of 20 to 100 km/h under the same condition as that of the reference tire assembly to measure a power generated amount by the first unit of each of the tire assemblies.

<Result 2>

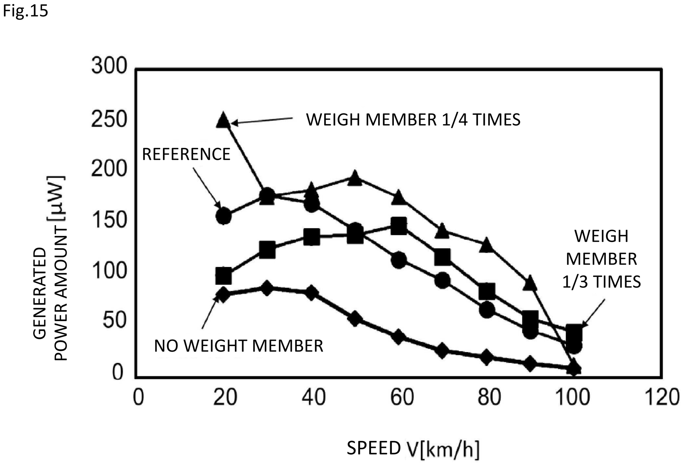

A graph of the generated power amount by the first unit of each tire assembly is shown in Fig. 15. As seen in the graph of Fig. 15, a peak in generated power amount is found around 60 km/h in the tire assembly with the mass of the weight member being set to one-third of the mass of the reference tire assembly, while a peak in generated power amount is found around 50 km/h in the tire assembly with the mass of the weight member being set to one-fourth of the mass of the reference tire assembly. From this, it is confirmed that, if the mass of the weight member is set to be one-third or less of the mass of the weight member of the reference tire assembly, the peak of the generated power amount of the first unit shifts to the high speed side (50 to 60 km/h). It is also confirmed that the generated power amounts of the tire assemblies each exceed that of the reference tire assembly at around 60 km/h. Moreover, the tire assembly without the weight member shows an overall decrease in generated power amount compared to the reference tire assembly, and a shift of the peak of the generated power amount to the high-speed side cannot be confirmed. This is considered due to lack of mass of the weight member, which leads to decrease in bending rigidity of the first unit and reduction in natural frequency. Moreover, it is considered that lack of the weight member makes it difficult to transmit deformation of the pushing member to the power generation body via the weight member, resulting in decrease in power generation.

<Test 3>

A tire assembly with the second unit according to the embodiments described above being fixed to the inner surface of the tire is prepared as a reference tire assembly. The reference tire assembly is incorporated into the testing device shown in Fig. 14 and is rotated under predetermined air pressure and wheel load conditions to confirm that the generated power amount of the second unit peaks at a speed region of 100 km/h or more. The second unit includes a power generation body in a square shape with a side length of 25 mm, a weight member having a mass of 1.4 g, and a tape. Next, a tire assembly in which a side length of the power generation body is 35 mm and the mass of the weight member is 2.7 g, and a tire assembly in which a side length of the power generation body is 25 mm and the mass of the weight member is 6.4 g are prepared both with the tire and the tape being common in configuration. In each of the tire assemblies, the weight member has the same square shape as the power generation body, and the side length is common with the side length of the power generation body. That is, the mass per unit area of the weight member is common among all tire assemblies. Each of the tire assemblies is incorporated into the above testing device and is rotated at speeds of 20 to 100 km/h under the same condition as the reference tire assembly to measure a generated power amount by the second unit of each of the tire assemblies.

<Result 3>

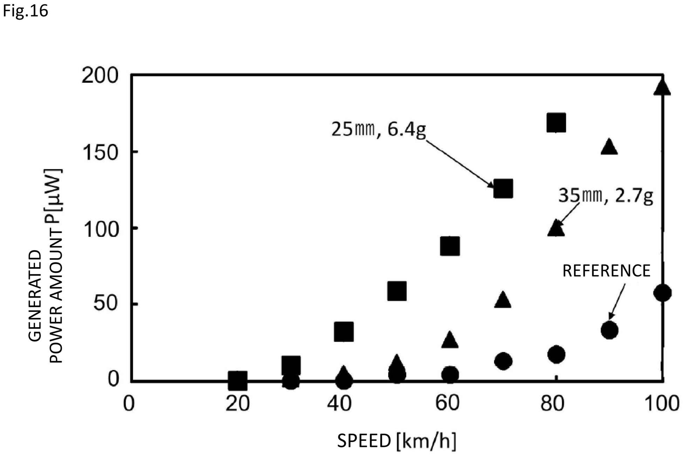

A graph of the generated power amount by the second unit of each tire assembly is shown in Fig. 16. As seen in the graph of Fig. 16, both the tire assembly with the weight member mass of 2.7 g and the tire assembly with the weight member mass of 6.4 g generate a higher overall power amount than that of the reference tire assembly. Moreover, for the tire assembly with the mass of the weight member of 2.7 g, a slope of the generated power amount against the speed is larger in a lower speed range than the speed range where the generated power amount of the reference tire assembly peaks than a slope of the reference tire in the same speed range. From this, it is confirmed that the peak of the generated power amount can be said to be shifted to a lower speed region in the tire assembly with a weight member mass of 2.7 g compared to the reference tire assembly. Moreover, the slope in the lower speed region is larger in the tire assembly with the mass of the weight member of 6.4 g than in the tire assembly with the mass of the weight member of 2.7 g. From this, it is confirmed that the peak of the generated power amount can be said to be further shifted to the lower speed region in the tire assembly with the mass of the weight member mass of 6.4 g.

REFERENCE SIGNS LIST

1, 1A to 1C, 1W to 1Y Tire assembly
2 Tire
3, 3A, 3B First power generation body unit
4, 4A, 4B, 4C, 4D Second power generation body unit
8 Vehicle
9 In-vehicle system
10, 10A, 10B, 10W, 10X, 10Y, 10Z Power generation body
31 Pushing member

**Claims**

**1.** A tire assembly comprising:

a tire mounted on a vehicle;
one or a plurality of first power generation body units; and
one or a plurality of second power generation body units that are different from the first power generation body units, wherein
the first power generation body unit includes:

a power generation body disposed on an inner surface of the tire; and
a pushing member fixed to the inner surface of the tire on both sides of the power generation body across the power generation body along a circumferential direction of the tire, the pushing member being deformable as the tire deforms,

the second power generation body unit includes:

a power generation body fixed to the inner surface of the tire; and
a weight member superimposed on the power generation body from a side opposite the inner surface across the power generation body,

the power generation body includes:

a first member with a first insulating film that forms a first surface; and
a second member with a second insulating film that forms a second surface facing the first surface and contacting the first surface,

the first member and the second member are configured such that a true contact area between the first surface and the second surface changes in response to forces applied to the first member and the second member, and the first insulating film and the second insulating film are configured such that one is positively charged and the other is negatively charged as the true contact area changes.

2. The tire assembly according to claim 1, wherein

the first power generation body unit is plural in number, and
the plurality of first power generation body units include at least one first power generation body unit including a weight member with a mass of M1 disposed between the power generation body and the pushing member, and at least one first power generation body unit including a weight member with a mass of M2 disposed between the power generation body and the pushing member,
where M1 > M2.

3. The tire assembly according to claim 1 or 2, wherein

the second power generation body unit is plural in number, and
the plurality of second power generation body units include at least one second power generation body unit including a weight member with a mass of M3, and at least one second power generation body unit including a weight member with a mass of M4,
where M3 < M4.

4. The tire assembly according to claim 1 or 2, wherein

the second power generation body unit is plural in number, and
the plurality of second power generation body units include at least one second power generation body unit having the first surface and the second surface each with an area of S1, and at least one second power generation body unit having the first surface and the second surface each with an area of S2,
where S1 < S2.

5. The tire assembly according to claim 1, further comprising
one or a plurality of circuits configured to receive power supply from each of the first power generation body unit and the second power generation body unit, and to be connected to an external computer in a data communicable manner.

6. The tire assembly according to claim 5, wherein
the first power generation body unit, the second power generation body unit, and the circuit are distributed and disposed at four or more locations along the circumferential direction of the tire.

7. The tire assembly according to claim 5, wherein
the first power generation body unit, the second power generation body unit, and the circuit are distributed and disposed at six or fewer locations along the circumferential direction of the tire.

8. The tire assembly according to claim 6 or 7, further comprising
a weight configured to reduce a mass difference among the first power generation body unit, the second power generation body unit, and the circuit that are distributed and disposed.

9. The tire assembly according to claim 6 or 7, wherein
at least one of the first power generation body unit, the second power generation body unit, and the circuit is disposed at a position deviated from a point that divides the tire into N equal parts along the circumferential direction.

10. The tire assembly according to claim 1 or 2, wherein
the pushing member contains at least one of rubber, a thermoplastic elastomer, a thermoplastic resin, and a thermosetting resin.

11. The tire assembly according to claim 10, wherein
the pushing member contains a composite material of rubber and a carbon fiber.

12. The tire assembly according to claim 5, wherein
the computer is configured to monitor at least one of an air pressure of the tire, an internal temperature of the tire, and a rotation speed of the tire.

13. A method of manufacturing a tire assembly, the tire assembly including a tire mounted on a vehicle, and a power generation body including a first member with a first insulating film that forms a first surface and a second member with a second insulating film that forms a second surface facing the first surface and contacting the first surface, the first member and the second member being configured such that a true contact area between the first surface and the second surface changes in response to forces applied to the first member and the second member, the first insulating film and the second insulating film being configured such that one is positively charged and the other is negatively charged as the true contact area changes, the method comprising:

preparing the tire;
preparing at least three power generation bodies including a first power generation body, a second power generation body, and a third power generation body; and
disposing the at least three power generation bodies on an inner surface of the tire individually, wherein
disposing the at least three power generation bodies on the inner surface of the tire individually includes:

fixing a pushing member deformable as the tire deforms to the inner surface of the tire on both sides of the first power generation body across the first power generation body along a circumferential direction of the tire such that a generated power amount of the first power generation body peaks in a first speed region of a rotation speed of the tire and disposing a first weight member having a first mass between the first power generation body and the pushing member;
superimposing a second weight member having a second mass on the power generation body from a side opposite the inner surface across the power generation body such that a generated power amount of the second power generation body peaks in a second speed region of the rotation speed of the tire; and
fixing an additional pushing member to the inner surface of the tire on both sides of the third power generation body across the third power generation body along the circumferential direction of the tire such that a generated power amount of the third power generation body peaks in a third speed region of the rotation speed of the tire and disposing a third weight member having a third mass smaller than the first mass between the third power generation body and the additional pushing member; or
superimposing a fourth weight member having a fourth mass larger than the second mass on the third power generation body from a side opposite the inner surface across the third power generation body such that the generated power amount of the third power generation body peaks in the third speed region of the rotation speed of the tire, and

the rotation speed in the first speed region is slower than the rotation speed in the third speed region, and the rotation speed in the third speed region is slower than the rotation speed in the second speed region.

Fig.1

Fig.2

Fig.3

Fig. 4

Fig. 5

Fig. 6

Fig.7A

Fig.7B

Fig.8

Fig.9

Fig.10

Fig.11

Fig.12

Fig.13

Fig.14

Fig.15

Fig.16

## INTERNATIONAL SEARCH REPORT

| International application No. |
| --- |
| **PCT/JP2024/026386** |

**A. CLASSIFICATION OF SUBJECT MATTER**

***B60C 19/00***(2006.01)i; ***B60C 23/04***(2006.01)i; ***H02N 1/00***(2006.01)i
FI:    B60C19/00 F; B60C23/04 120B; H02N1/00

According to International Patent Classification (IPC) or to both national classification and IPC

**B. FIELDS SEARCHED**

Minimum documentation searched (classification system followed by classification symbols)

B60C1/00-19/12; B60C23/00-23/20; H02N1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2022/180916 A1 (SUMITOMO RUBBER INDUSTRIES, LTD.) 01 September 2022 (2022-09-01)<br>paragraphs [0037], [0044], [0050], [0063]-[0064], [0068], [0070], [0072]-[0080], [0089], fig. 1-2, 4, 6, 9, 11A-11D | 1, 5-7, 10-12 |
| A | | 2-4, 8-9, 13 |
| Y | JP 2020-200012 A (SUMITOMO RUBBER INDUSTRIES, LTD.) 17 December 2020 (2020-12-17)<br>paragraphs [0034]-[0040], [0045]-[0050], [0063], [0094], fig. 1-2, 4, 6 | 1, 5-7, 10-12 |
| A | | 2-4, 8-9, 13 |

☐ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 August 2024** | **27 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/026386**

| Patent document cited in search report | | | Publication date (day/month/year) | Patent family member(s) | Publication date (day/month/year) |
|---|---|---|---|---|---|
| WO | 2022/180916 | A1 | 01 September 2022 | US 2024/0123776 A1 paragraphs [0075], [0082], [0088], [0101]-[0102], [0106], [0108], [0110]-[0118], [0127], fig. 1-2, 4, 6, 9, 11A-11D EP 4282669 A1 CN 116829380 A | |
| JP | 2020-200012 | A | 17 December 2020 | US 2020/0023693 A1 paragraphs [0037]-[0043], [0047]-[0051], [0058], [0090], fig. 1-2, 4, 6 EP 3597455 A1 CN 110733299 A | |

Form PCT/ISA/210 (patent family annex) (July 2022)

**REFERENCES CITED IN THE DESCRIPTION**

**Patent documents cited in the description**

- WO 2022180916 A